(19) Europäisches Patentamt
European Patent Office
Office européen des brevets

(11) Veröffentlichungsnummer: **0 140 166**
**A1**

## (12) EUROPÄISCHE PATENTANMELDUNG

(21) Anmeldenummer: **84111516.5**

(22) Anmeldetag: **27.09.84**

(51) Int. Cl.⁴: **F 17 D 1/16**
F 15 D 1/00

(30) Priorität: **05.10.83 DE 3336198**

(43) Veröffentlichungstag der Anmeldung:
**08.05.85 Patentblatt 85/19**

(84) Benannte Vertragsstaaten:
**BE CH DE FR GB LI NL SE**

(71) Anmelder: **HOECHST AKTIENGESELLSCHAFT**
**Postfach 80 03 20**
**D-6230 Frankfurt am Main 80(DE)**

(72) Erfinder: **Ohlendorf, Dieter, Dr.**
**Am Kühlen Grund 4**
**D-6237 Liederbach(DE)**

(72) Erfinder: **Wester, Norbert, Dr.**
**Sachsenring 12**
**D-6238 Hofheim am Taunus(DE)**

# (54) Verfahren zur Verminderung des Reibungswiderstandes in strömenden wässrigen Medien.

(57) Langkettige- Alkyl -oder Alkenyl-dialkyl- oder dihydroxyalkyl-aminoxide als Strömungsbeschleuniger in strömenden wäßrigen Medien, beispielsweise in Kühlkreisläufen und Fernheizsystemen.

EP 0 140 166 A1

Croydon Printing Company Ltd

HOECHST AKTIENGESELLSCHAFT HOE 83/F 210 Dr.OT/mk

Verfahren zur Verminderung des Reibungswiderstandes in strömenden wäßrigen Medien

Es ist allgemein bekannt, daß turbulent strömende Flüssigkeiten an den sie begrenzenden Wänden einen Reibungswiderstand erfahren. Es ist auch bekannt, daß man diesen Reibungswiderstand durch Zusatz geringer Mengen bestimmter Stoffe herabsetzen kann. Stoffe, die diese Wirkung zeigen, werden im englischen Sprachgebrauch als "drag reducing agents" bezeichnet. Im deutschsprachigen Raum wird für diese Stoffe die Bezeichnung "Strömungsbeschleuniger" verwendet (im folgenden abgekürzt durch SB). Unter einem Strömungsbeschleuniger versteht man danach einen Stoff, der in geringer Menge einer turbulent oder pulsierend strömenden Flüssigkeit zugesetzt, diese Flüssigkeit - unter sonst gleichen Bedingungen - schneller strömen läßt. Strömungsbeschleuniger bewirken, daß man mit einer gegebenen Pumpe durch eine gegebene Rohrleitung mehr Flüssigkeit fördern kann.

In vielen Fällen ist allein schon diese Tatsache ein technischer Gewinn, wenn z.B. eine Rohrleitung im Normalbetrieb voll ausgelastet ist und zu bestimmten Zeiten ein Spitzenverbrauch zu fördern wäre. Da mit einer gegebenen Pumpenleistung bei der Verwendung von Strömungsbeschleunigern mehr Flüssigkeit gefördert werden kann, wird auch in vielen Fällen die damit verbundene Energieeinsparung einen technischen Vorteil bringen. Schließlich kann man, wenn man die Durchsatzmenge nicht vergrößern will, bei Verwendung von SB den Druckverlust herabsetzen oder Rohre mit kleinerem Querschnitt verwenden. Beides sind Maßnahmen, die die Wirtschaftlichkeit im Betrieb einer Rohrleitung verbessern können.

Als Strömungsbeschleuniger für Wasser oder wäßrige Lösungen sind neben hochmolekularen Verbindungen, wie Polyethylenoxid und Polyacrylamid, Lösungen von einigen Tensiden bekannt. Zusätze hochmolekularer Verbindungen besitzen jedoch nur eine beschränkte praktische Einsatzfähigkeit als Strömungsbeschleuniger, da sie in Bereichen hoher Scher- und Dehnbeanspruchung, wie z.B. in Pumpen oder in geringem Maß in der turbulenten Grenzschicht nahe der Rohrwandung, durch mechanischen Abbau irreversibel ihre Wirksamkeit als Strömungsbeschleuniger verlieren. Für geschlossene Wasserkreisläufe, in denen dieselbe wäßrige Lösung durch ein Rohrleitungssystem ständig umgepumpt wird, sind hochmolekulare Zusätze folglich ungeeignet, da der irreversible mechanische Abbau eine laufende Nachdosierung mit wirksamer hochmolekularer Substanz erforderlich macht.

Zusätze von Tensiden in Wasser weisen bekanntlich nicht den Nachteil des irreversiblen mechanischen Abbaues auf (US-PS 3 961 639). Zwar läßt sich auch hier in Bereichen sehr hoher Dehn- und Scherbeanspruchung, wie z.B. in Pumpen, ein mechanischer Abbau beobachten, der jedoch völlig reversibel ist, sobald die Lösung diese Bereiche passiert hat. So ist die strömungsbeschleunigende Wirkung einer wäßrigen Lösung von Na-Oleat bei Zusatz von KCl + KOH oder NaCl+NaOH von Savins beschrieben (Rheol. Acta 6, 323 (1967)). Asslanow et al. (Izv. Akad. Nauk. SSSR, Mekh. Zhidk. Gaza 1,36-43 (1980) untersuchten u.a. wäßrige Lösungen von Na-Laurat, -Myristat, -Palmitat und -Stearat bei pH=11 als SB.

Chang et al. (US-PS 3 961 639) beschrieben die strömungsbeschleunigende Wirkung wäßriger Lösungen einiger nicht ionischer Tenside mit Fremdelektrolytzusatz bei Temperaturen im Bereich des Trübungspunktes.

Wesentliche Nachteile der genannten Tensidlösungen sind ihre relativ hohen Einsatzkonzentrationen von mindestens 0,25 Gew.-%, die Ausbildung zweier Phasen, die sich bei längerem Stehen trennen und zu Verstopfungen führen können, die Notwendigkeit der Zugabe von korrosionsfördernden Fremdelektrolyten, sowie ein sehr enger Temperaturbereich von wenigen Grad Celsius, in dem SB-Wirkung auftritt. Von diesen Nachteilen nicht behaftet sind wäßrige Lösungen einiger kationischer Tenside, wie z.B. Cetylpyridiniumbromid (Inzh. Fizh. Zh. 38, No. 6, 1031-1037 (1980)) oder Cetyltrimethylammoniumbromid (Nature 214, 585-586 (1967)) in jeweils 1:1 molarer Mischung mit α-Napththol. Neben der schlechten Wasserlöslichkeit des α-Napththols ist hier als entscheidender Nachteil zu nennen, daß derartige Mischungen ihre Wirksamkeit als SB innerhalb weniger Tage durch chemischen Abbau verlieren (US-PS 3 961 639, Conference Proceeding: Intern. Conference on Drag Reduction, 4.-6.9.1974 Rolla Missouri, USA). Bekannt ist auch die Verwendung von Cetyltrimethylammoniumsalicylat und Tetradecyl trimethylammoniumsalicylat als SB. Diese Tensidsalze lassen sich aber nur unter großem Aufwand frei von korrosiven Halogenionen herstellen.

Überraschenderweise wurde nun gefunden, daß zum Unterschied zu allen bisher als SB bekannten Tensiden die nachfolgend aufgeführten Verbindungen in reiner Form schon in kleinsten Konzentrationen als Strömungsbeschleuniger wirksam sind, wobei diese Verbindungen, bedingt durch ihre Herstellung, völlig frei von korrosiven Elektrolyten sind.

Gegenstand der Erfindung ist somit ein Verfahren zur Verminderung des Reibungswiderstandes von turbulent oder pulsierend strömenden wäßrigen Medien, das dadurch

gekennzeichnet ist, daß man dem wäßrigen Meidum ein Aminoxid der Formel

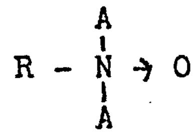

zugibt, wobei R eine Gruppe der Formel $R_1-(OCH_2CH_2)_n-$, $C_8-C_{18}$-Alkylaryl oder Aryl-$C_8-C_{18}$-alkyl, $R_1$ $C_{14}-C_{22}$-Alkyl oder $C_{14}-C_{22}$-Alkenyl, n eine Zahl von 0 bis 5 und die Reste A gleich sind und $C_1-C_4$-Alkyl oder $C_1-C_4$-Hydroxialkyl bedeuten.

Bevorzugt sind solche Aminoxide, worin R Alkyl oder Alkenyl bedeutet. Aryl bedeutet vorzugsweise Phenyl oder auch Naphthyl. Unter der Bedeutung von A sind Methyl und Hydroxiethyl bevorzugt.

Die Alkyldi(hydroxiethyl)amminoxide werden zur Verminderung des Reibungswiderstandes den wäßrigen Medien zugegeben in Konzentrationen von 0,03 bis 5 Gew.-%, vorzugsweise von 0,15 bis 0,6 Gew.-%.

Für die Alkyldimethylaminoxide werden Konzentrationen von 1 bis 5 Gew.-% bevorzugt. Für jedes Aminoxid existiert jedoch eine andere untere kritische Konzentrationsgrenze für eine ausreichende Wirkung als SB. Die Wirkung als SB ist außerdem abhängig von der Temperatur. Die untere Temperaturgrenze wird durch die Löslichkeitstemperatur des Aminoxids in Wasser bestimmt. Ist das Aminoxid jedoch in Lösung, so kann die Löslichkeitstemperatur einige Stunden bis Tage um 5 bis 20°C unterschritten werden. Die obere Temperaturgrenze liegt im allgemeinen etwa 30 bis 50°C oberhalb der Löslichkeitstemperatur des jeweiligen Aminoxids. Die maximale obere Temperaturgrenze beträgt 80°C und sollte nur kurzzeitig überschritten werden.

0140166

Für die n-Alkyldi(hydroxiethyl)aminoxide wurden folgende Bereiche, in denen die optimale Wirksamkeit als SB auftritt, gefunden:

n-Hexadecyldi(hydroxiethyl)aminoxid im Bereich von 0,2 bis 5 Gew.-%, vorzugsweise 0,4 bis 2 Gew.-%, von 20 bis 55°C; n-Octadecyldi(hydroiethyl)aminoxid im Bereich von 0,03 bis 5 Gew.-%, vorzugsweise 0,15 bis 1 Gew.-% von 40 bis 75°C; Stearyldi(hydroxiethyl)aminoxid im Bereich von 0,1 bis 5 Gew.-%, vorzugsweise 0,2 bis 1 Gew.-% von 40 bis 75°C und Oleyldi(hydroxiethyl)aminoxid im Bereich von 0,1 bis 2 Gew.-% von 25 bis 75°C.

Die maximale Wirksamkeit als Strömungsbeschleuniger ist von der Zeit abhängig, die verstrichen ist seit der Herstellung der wäßrigen Lösungen der Aminoxide. Die Tensidlösungen zeigen zwar bereits sofort nach dem Ansetzen der Lösungen eine Wirkung als Strömungsbeschleuniger, doch kann sich diese Wirkung während einer Woche noch deutlich ändern. Die Zeit, die benötigt wird, um eine optimale Wirkung zu erzielen, läßt sich für den Einzelfall unschwer durch einfache Versuche ermitteln. In den meisten Fällen wird die optimale Wirkung nach einer Woche erreicht. Eine Änderung oder Verbesserung der Wirkung tritt dann nicht mehr ein.

Die Untersuchung der genannten Tenside auf ihre Wirksamkeit als SB erfolgte in der üblichen Art, indem für die jeweilige wäßrige Lösung der Tenside der Druckabfall $\Delta P$ über die Strecke L bei Durchströmen eines Rohres mit dem Querschnitt d für verschiedene Strömungsgeschwindigkeiten u gemessen wurde. Aus diesen Werten lassen sich die dimensionslösen Größen, Reibungsbeiwert $\lambda$ und die Reynoldszahl Re, berechnen,

$$\lambda = \frac{2\ d}{\delta\ u^2} \cdot \frac{\Delta P}{L}$$

$$Re = \frac{u\ d}{\nu}$$

wobei $\delta$ die Dichte und $\nu$ die kinematische Viskosität bedeuten. Üblicherweise werden für $\delta$ und $\nu$ jeweils die entsprechenden Werte des reinen Lösungsmittels, Wasser, eingesetzt. Die so erhaltenen Werte $\lambda$, Re, für die untersuchten Tensid-Lösungen wurden in der üblichen doppelt logarithmischen Auftragung $\lambda$ gegen Re mit den entsprechenden Werten für reines Wasser, wiedergegeben durch

$$1/\sqrt{\lambda} = 2\log Re\sqrt{\lambda} - 0{,}8$$

verglichen. Eine Wirkung als SB oder auch Reibungsminderung liegt dann vor, wenn gilt: $\lambda_{H_2O} - \lambda_{SB}$ größer als 0, bzw. die Größe der Reibungsminderung in Prozent berechnet sich nach

$$\alpha = \%\ \text{Reibungsminderung} = \frac{\lambda_{H_2O} - \lambda_{SB}}{\lambda_{H_2O}} \times 100$$

Wie aus der Figur ersichtlich ist, wirken die genannten Tensidlösungen als SB in der Weise, daß die prozentuale Reibungsminderung mit ansteigender Reynoldszahl zunimmt, dann aber nach Überschreiten einer bestimmten Reynoldszahl, $Re_{max}$, mit maximaler prozentualer Reibungsminderung, sehr schnell wieder abnimmt. Der Grad der Wirksamkeit einer Tensidlösung als SB soll im folgenden Text durch die Größe von $Re_{max}$ gekennzeichnet werden; demnach besitzt eine Tensidlösung mit $Re_{max}$ = 20 000 eine bessere Wirksamkeit als SB als eine Tensidlösung mit $Re_{max}$ = 10 000. Der zugehörige $\alpha$-Wert soll mit $\alpha_{max}$ gekennzeichnet werden. Die Untersuchungen der Tensidlösungen ergaben nur dann reproduzierbare Ergebnisse, wenn die wäßrigen Lösungen der Tensidsalze vor den Messungen jeweils für ca. 1 Woche

bei den Meßtemperaturen aufbewahrt wurden. Die Lösungen zeigen zwar auch sofort nach dem Ansetzen eine Wirkung als Strömungsbeschleuniger, die sich jedoch im Verlauf einer Woche noch deutlich ändern kann.

Die so vorbehandelten Tenside wurden einer Vielzahl von Tests unterzogen. So ergab ein Dauerversuch über mehrere Tage, wie aus Beispiel 5 ersichtlich, daß bei den aufgeführten Tensiden keine Abnahme ihrer strömungsbeschleunigenden Wirkung durch mechanischen oder chemischen Abbau auftritt. Weiterhin zeigte sich, daß die Wirksamkeit als SB der genannten Tenside mit zunehmender Konzentration zunimmt; allerdings steigt auch die Viskosität der Lösungen an, so daß die prozentuale Reibungsminderung bei kleineren Reynoldszahlen schlechter wird.

Die durchgeführten Untersuchungen zeigen, daß sich die genannten Tensid-Salze als Strömungsbeschleuniger überall dort eignen, wo Wasser durch Rohrleitungen gepumpt wird, insbesondere aber dort, wo Wasser in einem Rohrleitungssystem ständig im Kreislauf umgepumpt wird, wie z.B. in Wärme- und Kühlkreisläufen, da hier eine hohe Langzeitstabilität des SB, wie sie die genannten Aminoxide aufweisen, unbedingt erforderlich ist. Die Zudosierung der Aminoxide in das die Rohrleitungen durchströmende Wasser kann sowohl in Form einer konzentrierten Tensidlösung erfolgen, als auch durch Zugabe einer hochkonzentrierten Paste. Wegen des guten Durchmischungseffektes ist eine Zudosierung in das Rohleitungssystem kurz vor einer Pumpe der günstigste Ort.

Beispiel 1

Es wurde eine Konzentrationsreihe von 350, 500, 1000, 1500, 2000, 2500, 3000, 4000 und 5000 Gew.-ppm von Octadecyldi(hydroxiethyl)aminoxid in Elektrolyt-freiem Wasser (E-Wasser) angesetzt, indem entsprechende Mengen

von 1,4; 2,0; 4,0; 6,0; 8,0; 8,0; 10,0; 12,0; 16,0 und 20,0 g einer 25 %igen wäßrigen Paste des Aminoxids auf 1000 g E-Wasser eingewogen wurden. Nach dem Auflösen unter Rühren bei 40°C wurden die Lösungen kurz auf ca. 75°C erhitzt und dann vor jeder Messung bei der jeweiligen Meßtemperatur für eine Woche temperiert.

Die Untersuchung auf Reibungsminderung erfolgte anschließend in einem Turbulenzrheometer (Polymer Letters 9,851 (1971)), indem analog zu einer Spritze eine Flüssigkeitsmenge von 1,5 l mit Hilfe eines Kolbens durch das Meßrohr gedrückt wird. Die Bewegung des Kolbens wird während der Messung beschleunigt, so daß die gesamte Fließkurve, wie in der Figur dargestellt, in einer Messung erfaßt wird. Der Durchmesser des Meßrohres beträgt 3 mm, die Meßstrecke für $\Delta P$ 300 mm und die Einlaufstrecke 1200 mm.

In dieser Apparatur wurden die 4000 und 5000 ppm Lösungen bei 45°C und die gesamte Konzentrationsreihe bei 60°C und 70°C gemessen.

In der Abbildung sind die Fließkurven mit 350, 500, 1000 und 2000 ppm bei 60°C dargestellt. (1) zeigt die Meßkurve für reines Wasser.
Die Tabelle 1 faßt die Ergebnisse aller Messungen durch Wiedergabe von $Re_{max}$ und $\lambda_{max}$ zusammen.

Beispiel 2

Es wurde eine Konzentrationsreihe von 1000, 1500, 2000, 3000 und 4000 Gew.-ppm von Oleyl-di(hydroxiethyl)aminoxid in E-Wasser, wie in Beispiel 1 beschrieben, angesetzt und vorbehandelt und im Turbulenzrheometer bei 50°C auf Reibungsminderung untersucht. Die Lösungen mit einem Gehalt von 3000 und 5000 Gew.-ppm wurden bei 63°C

gemessen. Tabelle 2 faßt die Ergebnisse zusammen.

Beispiel 3

Wie in Beispiel 1 beschrieben wurden wäßrige Lösungen von n-Alkyldi(hydroxiethyl)aminoxiden mit unterschiedlichen Alkylresten angesetzt und vorbehandelt und im Turbulenzrheometer auf Reibungsminderung untersucht. Tabelle 3 faßt die Ergebnisse durch Wiedergabe von $Re_{max}$ und $\lambda_{max}$ zusammen.

Beispiel 4

Wie in Beispiel 1 beschrieben wurden wäßrige Lösungen von n-Hexadecyldimethylaminoxid und n-Octadecyldimethylaminoxid mit einem Gehalt von jeweils 2 Gew.-% angesetzt und vorbehandelt und im Turbulenzrheometer auf Reibungsminderung untersucht. Für n-Hexadecyldimethylaminoxid wurde Reibungsminderung mit $Re_{max}$ = 5000 und $\lambda_{max}$ = 30 % und für n-Octadecyldimethylaminoxid Reibungsminderung mit $Re_{max}$ = 7000 und $\lambda_{max}$ = 40 % gefunden.

Beispiel 5

Zur Untersuchung der Reibungsminderung in einem Dauerversuch bei 60°C wurde eine geschlossene Strömungsapparatur benutzt, bestehend aus einem 30 l Vorratsgefäß, einer Kreiselpumpe (Typ: CPK 50-250 der Firma KSB mit mechanischem Regelgetriebe), einem induktiven Durchflußmesser und einer Rohrleitung von 20 m Länge mit einem Innendurchmesser von 29,75 mm. Die Bestimmung des Druckabfalls $\Delta P$ erfolgte nach einer gehörigen Einlaufstrecke über eine Meßstrecke von 2 m. Zur Thermostatisierung dient ein Tauchsieder, der die Flüssigkeit im Vorratsbehälter elektrisch aufheizte. Während des Dauerversuches wurde die Flüssigkeit ständig am Boden des

Vorratsgefäßes abgepumpt und über die Rohrleitung dem Vorratsbehälter wieder zugeführt. Für E-Wasser bei 60°C läßt sich die Förderleistung der Pumpe mit Hilfe des mechanischen Regelgetriebes von 3 bis 14 $m^3/h$ variieren entsprechend den Strömungsgeschwindigkeiten von 1,25 bis 5,6 m/s bzw. den Reynoldszahlen von 78400 bis 351000 für den Rohrdurchmesser von 29,75 mm.

Eine wäßrige Lösung von n-Octadecyl(dihydroxiethyl)aminoxid mit einem Gehalt von 1500 Gew.-ppm, hergestellt wie in Beispiel 1 beschrieben, wurde in dieser Apparatur auf ihre Zeitbeständigkeit als Strömungsbeschleuniger bei 60°C untersucht. Der Dauerversuch wurde bei einem Durchfluß von 13 $m^3/h$, entsprechend einer Strömungsgeschwindigkeit von 5,2 m/s bzw. einer Reynoldszahl von 326 165 über einen Zeitraum von 14 Tagen durchgeführt. Unter den angegebenen Bedingungen passiert das gleiche Flüssigkeitsvolumen ca. 5 mal pro Minute die Kreiselpumpe. Trotz der sehr hohen Scherbeanspruchung wurde für die gesamte Versuchsdauer von 14 Tagen eine konstante Reibungsminderung von 75 ± 4% gefunden. Ein Nachlassen der Wirksamkeit durch Abbau konnte nicht festgestellt werden.

Tabelle 1

n-Octadecyldi(hydroxiethyl)aminoxid

| T/°C | Konzentration ppm | $Re_{max}$ | $\alpha_{max}$ |
|---|---|---|---|
| 45 | 4000 | 45400 ± 4500 | 75 ± 4 |
| 45 | 5000 | 57200 ± 5700 | 77 ± 4 |
| 60 | 350 | 8700 ± 800 | 57 ± 3 |
| 60 | 500 | 25900 ± 2600 | 72 ± 3 |
| 60 | 1000 | 50500 ± 5000 | 74 ± 3 |
| 60 | 1500 | 59000 ± 6000 | 76 ± 4 |
| 60 | 2000 | 61800 ± 6200 | 77 ± 4 |
| 60 | 3000 | 75500 ± 7500 | 79 ± 4 |
| 60 | 4000 | 81400 ± 8100 | 79 ± 4 |
| 60 | 5000 | 84300 ± 8400 | 80 ± 4 |
| 70 | 500 | kein Effekt | - |
| 70 | 1000 | | - |
| 70 | 1500 | 21500 ± 2100 | 65 ± 3 |
| 70 | 2000 | 24200 ± 2400 | 69 ± 3 |
| 70 | 3000 | 7000 ± 700 | 43 ± 2 |
| 70 | 4000 | 4700 ± 500 | 35 ± 2 |
| 70 | 5000 | 40100 ± 4000 | 72 ± 3 |

Tabelle 2

Oleyldi(hydroxiethyl)aminoxid

| T/°C | Konzentration ppm | $Re_{max}$ | $\alpha_{max}$ |
|---|---|---|---|
| 50 | 1000 | 19900 ± 2000 | 63 ± 3 |
| 50 | 1500 | 49000 ± 5000 | 60 ± 3 |
| 50 | 2000 | 61400 ± 6100 | 54 ± 3 |
| 50 | 3000 | 74700 ± 7500 | 58 ± 3 |
| 50 | 4000 | 86000 ± 8600 | 74 ± 4 |
| 63 | 3000 | 36700 ± 3700 | 67 ± 3 |
| 63 | 5000 | 77000 ± 7700 | 74 ± 4 |

Tabelle 3

| Substanz | T/°C | Konz. ppm | $Re_{max}$ | $\alpha_{max}$ |
|---|---|---|---|---|
| n-Hexadecyldi(hydroxiethyl)aminoxid | 25 | 4000 | 12000±1200 | 60±3 |
| n-Hexadecyldi(hydroxiethyl)aminoxid | 25 | 5000 | 10300±1000 | 51±3 |
| n-Hexadecyldi(hydroxiethyl)aminoxid | 45 | 4000 | 8800± 900 | 16±2 |
| n-Hexadecyldi(hydroxiethyl)aminoxid | 45 | 5000 | 12600±1300 | 38±2 |
| Talgfettalkyldi(hydroxiethyl)aminoxid | 45 | 5000 | 37100±3700 | 69±3 |
| Stearylalkyldi(hydroxiethyl)aminoxid | 45 | 2000 | 8500± 800 | 43±2 |
| Stearylalkyldi(hydroxiethyl)aminoxid | 45 | 3000 | 15500±1500 | 47±2 |
| Stearylalkyldi(hydroxiethyl)aminoxid | 45 | 5000 | 25700±2600 | 60±3 |

## Patentansprüche:

1. Verfahren zur Verminderung des Reibungswiderstandes von turbulent oder pulsierend strömenden wäßrigen Medien, dadurch gekennzeichnet, daß man dem wäßrigen Medium eine Verbindung der Formel

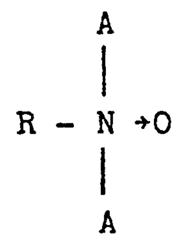

zugibt, wobei R eine Gruppe der Formel $R_1-(OCH_2CH_2)_n-$, $C_8$-$C_{18}$-Alkylaryl oder Aryl-$C_8$-$C_{18}$-alkyl, $R_1$ $C_{14}$-$C_{22}$-Alkyl oder $C_{14}$-$C_{22}$-Alkenyl, n eine Zahl von 0 bis 5 und die Reste A gleich sind und $C_1$-$C_4$-Alkyl oder $C_1$-$C_4$-Hydroxialkyl bedeuten.

2. Verfahren nach Anspruch 1, dadurch gekennzeichnet, daß man ein Aminoxid zugibt, worin R $C_{14}$-$C_{22}$-Alkyl oder $C_{14}$-$C_{22}$-Alkenyl und A Methyl oder Hydroxiethyl bedeuten.

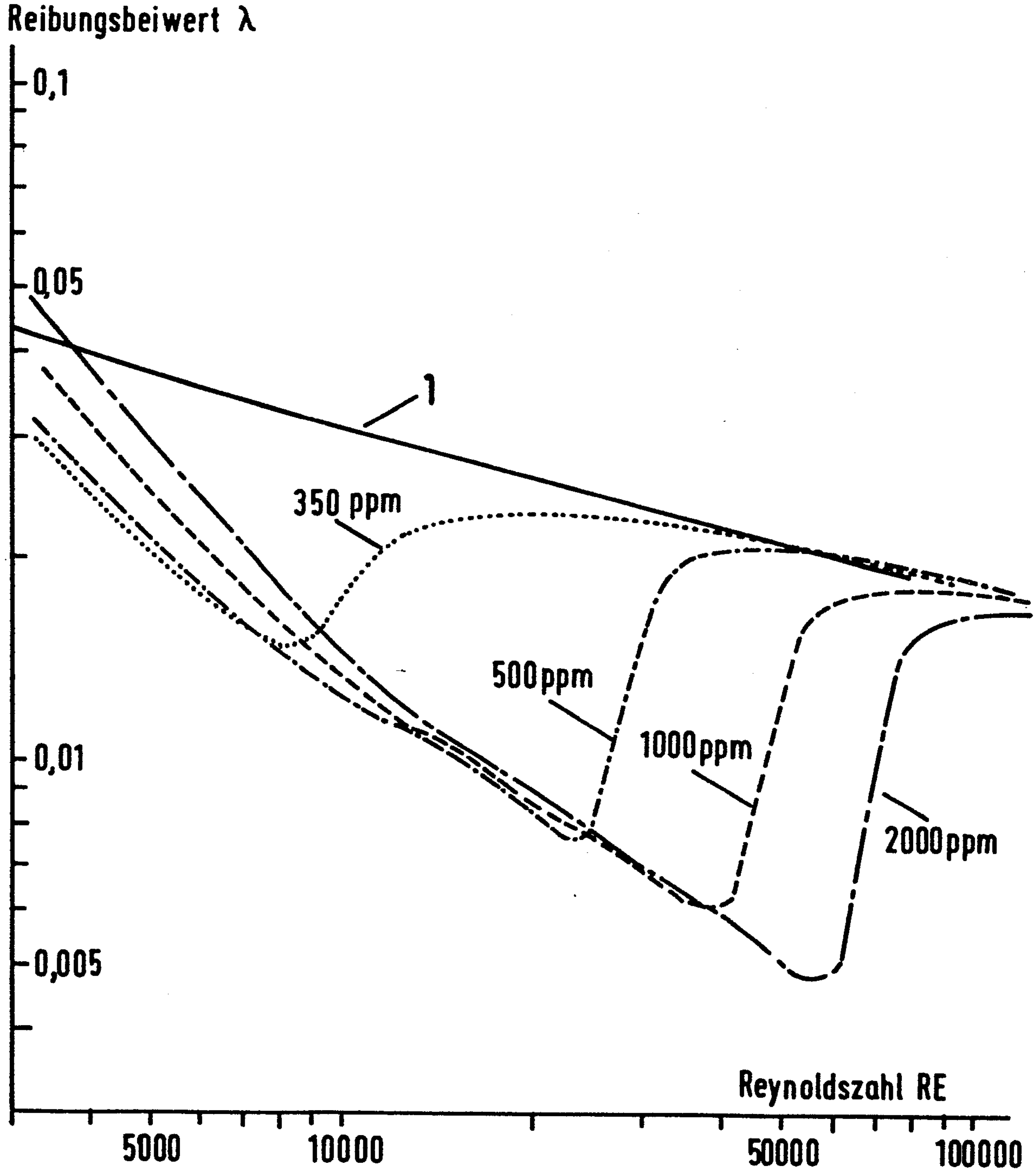
Reibungsbeiwert λ
0,1
0,05
0,01
0,005
1
350 ppm
500ppm
1000ppm
2000ppm
Reynoldszahl RE
5000
10000
50000
100000

Europäisches Patentamt

# EUROPÄISCHER RECHERCHENBERICHT

0140166

Nummer der Anmeldung

EP 84 11 1516

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 301 583 (DOW CHEMICAL CO.)<br>* Seite 29, Anspruch 1; Seite 30, Anspruch 3 * | 1 | F 17 D 1/16<br>F 15 D 1/00 |
| | --- | | |
| A | FR-A- 838 597 (SOC. POUR L'INDUSTRIE CHIMIQUE)<br>* Seite 1, Zeilen 1-17 * | 1 | |
| | --- | | |
| A | FR-A-1 418 653 (ARMOUR HESS CHEMICALS LTD.)<br>* Seite 4 * | 1 | |
| | --- | | |
| A | US-A-3 565 810 (M.L. MAUSNER u.a.)<br>* Spalte 1, Zeilen 25-50 * | 1 | RECHERCHIERTE SACHGEBIETE (Int. Cl.4) |
| | --- | | |
| A | US-A-2 159 967 (MAX ENGELMANN) | | F 17 D<br>F 15 D<br>C 07 C |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 03-01-1985 | KERRES P.M.G. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument